# EUROPEAN PATENT SPECIFICATION

(11) **EP 2 570 884 B1**
(45) Date of publication and mention of the grant of the patent: **03.02.2016**
(21) Application number: 12184585.3
(22) Date of filing: 14.09.2012
(51) Int. Cl.: G06F 1/16, E05B 17/20

(54) **Docking station**
Andockstation
Station d'accueil

(30) Priority: 16.09.2011 GB 201116089
(43) Date of publication of application: 20.03.2013
(73) Proprietor: Panasonic Manufacturing UK, Ltd., Cardiff, South Glamorgan CF23 7XB (GB)
(72) Inventor: Mann, Terence, Sutton Coldfield, West Midlands B74 4XR (GB)
(74) Representative: Pearson, James Ginn

(56) References cited:
- US-B1- 7 911 779

## Description

### Field of invention

The present invention relates to a docking station for a mobile computer.

### Background

In recent years the range of mobile computers has developed into, for example, tablets, mobile clinical assistants and rugged tablet PCs. This type of mobile computer is typically smaller than a standard laptop or notebook computer, and unlike such computers, often does not have a screen that is hinged to the body of the device that includes the processor, hard-disk, keyboard and the like. Instead, such devices typically have either a fixed relationship between the keyboard and the screen, with the keyboard being provided on the same face of the device as the screen and/or such devices utilise a touch screen with an on-screen keyboard. Mobile computers, of this type also have a screen size in the range of 17.8 cm to 30.5 cm (7 to 12 inches).

A mobile computer may run using a full desktop operating system such as Windows® XP®, Vista®, Windows® 7 Professional, Windows ® 8 (in the future) or Linux. Examples of such mobile computers are a mobile clinical assistant or a rugged handheld tablet; for example, the Panasonic Toughbook® H1 Health mobile clinical assistant, the Panasonic Toughbook® H1 Field handheld tablet PC, or the Panasonic Toughbook® H2 handheld tablet PC. Other mobile computers may be adapted to run a mobile operating system, for example iOS, Android, QNX, Palm OS. They may share a similar form factor, but have fewer connectivity options and have a lesser amount (typically) of flash memory.

A particular problem with mobile computers of the type discussed, in particular those that are ruggedised, is how to securely hold them within a docking station in a potentially hostile environment such as in a hospital, in a manufacturing environment or in a moving vehicle and yet at the same time enable access to the keyboard and/or touchscreen and interface ports such as USB sockets, microphone and headphone sockets and expansion slots. A further complication with such devices is that they may be provided with a handstrap on their rear face that enables the mobile computer to be held securely in one hand while a user interacts with the keyboard, screen, etc. using their other hand. It is not desirable to remove the handstrap each time the mobile computer is docked. Therefore, it is particularly desirable to provide a docking station that holds the mobile computer with the handstrap in place, and yet ensures that the handstrap does not impede the insertion or removal of the mobile computer from the docking station.

Thus, docking stations for use with laptop computers are not suitable for use with mobile computers, particularly when rugged versions of mobile computers and docking stations are needed for operation outside of the office environment, such as for operation in hospitals, factory floors, vehicles and the like.

WO2010/018011 describes a docking station for a mobile computer that uses a two step positioning procedure; the mobile computer is positioned in the docking station and then the mobile computer is secured.

US7911779B1 discloses a docking station for a mobile computer, the docking station including a latch which is movable between a position in which a mobile computer can be inserted or removed from the docking station, and a position in which a mobile computer is retained in the docking station.

### Summary of Invention

An aim of the present invention is to overcome, or at least mitigate problems of the prior art docking stations.

In a first aspect, the present invention provides a docking station for a mobile computer, the docking station having a latching mechanism for latching a mobile computer in the docking station, the mobile computer being placeable in the docking station by inserting the mobile computer towards the latching mechanism, the latching mechanism having:
a latch moveable between an unlatched position and a latched position, such that in the unlatched position the mobile computer can be placed in or removed from the docking station and in the latched position removal of the mobile computer from the docking station is prevented; characterised by
a retainer moveable between a blocking position and an unblocked position, such that in the blocking position the retainer prevents movement of the latch to the unlatched position and in the unblocked position movement of the latch to the unlatched position is permitted; and
an actuator for moving the retainer between the blocking and unblocked position;
wherein the actuator is positioned such that when the mobile computer is inserted towards the latching mechanism the mobile computer contacts and actuates the actuator to move the retainer to the unblocked position and whilst the retainer is in the unblocked position the mobile computer contacts the latch and at least partially moves the latch to the unlatched position.

Advantageously, the retainer prevents the latch from being moved to the unlatched position during use, for example by vibration or by the latch being pushed, but the ease of insertion of the mobile computer in the docking station is uncompromised by the provision and positioning of the actuator. The latching mechanism of the docking station of the present invention enables the mobile computer to be placed and latched in the docking station in a simple, single-handed, single-step process.

The retainer may be configured to block the motion of the latch.

Preferably, the actuator is positioned forward of the latch such that the mobile computer first contacts the actuator and subsequently contacts the latch. In an example the actuator is positioned to axially overlap the latch.

The actuator may be configured so as to permit progressive movement of the retainer to the unblocked position.

The mobile computer may be of the type having a handle. The mobile computer may be of the type for use in the health industry, for example a mobile clinical assistant, or be of the type for use in manufacturing industry or for mobile workers working in vehicles and/or outdoor environments, for example a rugged tablet PC.

In preferred embodiments, a surface of the actuator that contacts the mobile computer, when the mobile computer is being placed in the docking station, is inclined. The inclined surface of the actuator eases the insertion of the mobile computer into the docking station. The surface of the latch that contacts the mobile computer, when the mobile computer is being placed in the latching mechanism, may be inclined. The inclined surface of the latch also eases insertion of the mobile computer into the docking station.

The retainer may be resiliently biased to the blocking position. The actuator may be resiliently biased to a rest position. The rest position being a position where the actuator is ready to be actuated to move the retainer to the unblocked position. The latch may be resiliently biased to the latched position. Advantageously, a resiliently biased latch ensures a good connection between the latch and the mobile computer even in tough environments, such as environments with high levels of vibration. In some examples, the resilient biasing is provided by a spring.

In preferred embodiments, the actuator is pivotable about an axis of the latching mechanism, such that rotary movement of the actuator moves the retainer to the unblocked position. For example, the latch may have a surface configured to cooperate with a surface of the actuator so as to convert the rotary motion of the actuator to linear motion of the latch. Preferably, the latch is pivotable about an axis of the latching mechanism, such that rotary movement of the latch moves the latch between the unlatched and latched position. In preferred embodiments, the latch and the actuator are pivotable about a common axis. Pivotable mounting of the latch and/or the actuator further eases the insertion of the mobile computer into the docking station, by providing little resistance to the inserting motion of the mobile computer. This arrangement is further advantageous in embodiments where the mobile computer is tilted into the docking station, the tilting motion being towards the latching mechanism, because the resistance to insertion is further reduced by the actuator and latch rotating generally along the same path as the tilting computer. The actuator may be pivotable about an axis of the latching mechanism, such that rotary movement of the actuator moves the retainer between the blocking and unblocked positions.

Preferably, the docking station further comprises a latch release button for moving the retainer to the unblocked position so as to permit movement of the latch to the unlatched position. Preferably, the latch release button is configured to move the latch to the unlatched position. Provision of a latch release button eases the removal of the mobile computer from the docking station because it removes the need to actuate the actuator to remove the mobile computer and permits the mobile computer to be removed from the docking station by a user using only a single hand.

The latch release button may be resiliently biased.

In a preferred embodiment, the docking station further comprises a guide arm, and the latch and actuator are positioned so as to protrude from the guide arm. In the case of the docking station having a guide arm and a latch release button, the latch release button may be configured to move along the longitudinal axis of the guide arm.

The guide arm may be positioned so as to be in a direction transverse to the screen of the mobile computer. In some examples, the guide arm may be positioned perpendicular to the screen of the mobile computer.

In the case of the mobile computer having a handle, the guide arm may be configured such that in the latched position, the guide arm is positioned underneath the handle of the mobile computer and the latch and the actuator protrude from the guide arm in the direction of the handle of the mobile computer. In this case, preferably, the guide arm is sized so as to be similar in height as the opening formed by the handle of the mobile computer.

The docking station may further comprise:
a base support for receiving the base of the mobile computer; and
a rear support for supporting the rear of the mobile computer; wherein the guide arm is positioned to oppose the base support and the guide arm supports the upper end of the mobile computer. The provision of a base support improves the stability of the mobile computer in the docking station. Preferably the base is cupped such that to place the mobile computer in the docking station, the base of the mobile computer is received in the base and the mobile computer is tilted towards the actuator and the latch.

In preferred embodiments, the docking station further comprises an electrical connection to the mobile computer. The electrical connection may be a charging port and/or a connection to other computer equipment. The electrical connection may be provided in the base support.

Preferably the docking station further comprises a lock, the lock being lockable to prevent release of the latch.

In a second aspect, the present invention provides a latching mechanism of the docking station of the first aspect.

In a third aspect, the present invention provides a docking station having a mounting system for securing the docking station to a surface, the mounting system having:
a mounting bracket attachable to a surface and having a receiving slot; and
a docking station bracket attachable to the docking station and having a positioning portion;
the positioning portion being positionable in the receiving slot so as to connect the docking station bracket to the mounting bracket.

The mounting bracket and the docking station bracket being distinct connectable components. The mounting system provides ease of attachment to a surface. It is possible to attach the mounting bracket to a chosen surface. The positioning portion can then easily be correctly aligned to the mounting bracket by sliding the positioning portion into the receiving slot. The mounting system of the present invention alleviates the problems of the prior art where there is a need to attach the whole of the mounting system to a surface whilst the docking station is attached, which can be awkward and cause problems of not being able to mount the docking station in an aligned position on the surface.

The docking station may further comprise a fastener for fastening the docking station bracket to the mounting bracket. For example the fastener may be a (tamper resistant) screw received through a hole in the docking station bracket and the mounting bracket and secured with a (tamper resistant) bolt.

Preferably, the positioning portion of the docking station bracket has an inclined section to ease receipt of the positioning portion in the receiving slot of the mounting bracket. In an example, the positioning portion has a triangular shaped section. The triangular shaped section eases receipt of the positioning portion in the receiving slot and centralising of the positioning portion in the receiving slot.

In a fourth aspect, the present invention provides a mounting system of the docking station of the third aspect.

In a fifth aspect, the present invention provides a docking station having the latching mechanism of the second aspect and the mounting system of the fourth aspect.

### Description of drawings

Embodiments of the present invention will now be described, by example only, with reference to the accompanying drawings in which:
FIGURE 1 shows an isometric view of a mobile computer placed in a docking station, the docking station being according to an embodiment of the present invention;
FIGURE 2 shows an isometric view from a rear perspective of the mobile computer and docking station of Figure 1;
FIGURE 3 shows an isometric view of the docking station of figure 1 without a mobile computer placed in the docking station;
FIGURE 4 shows an isometric view of the latching mechanism of the docking station of Figures 1 to 3; and
FIGURE 5 shows an isometric view of the latching mechanism of Figure 4 with a cover plate removed.

### Detailed description

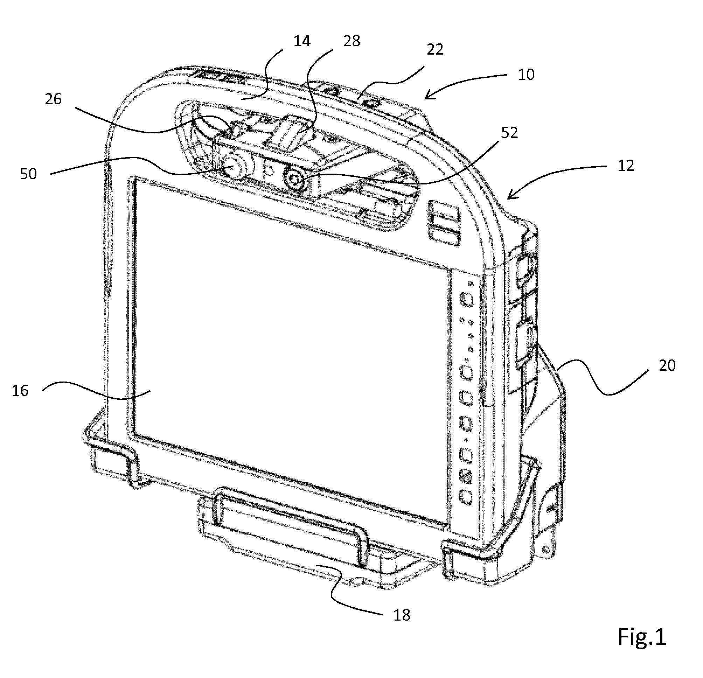

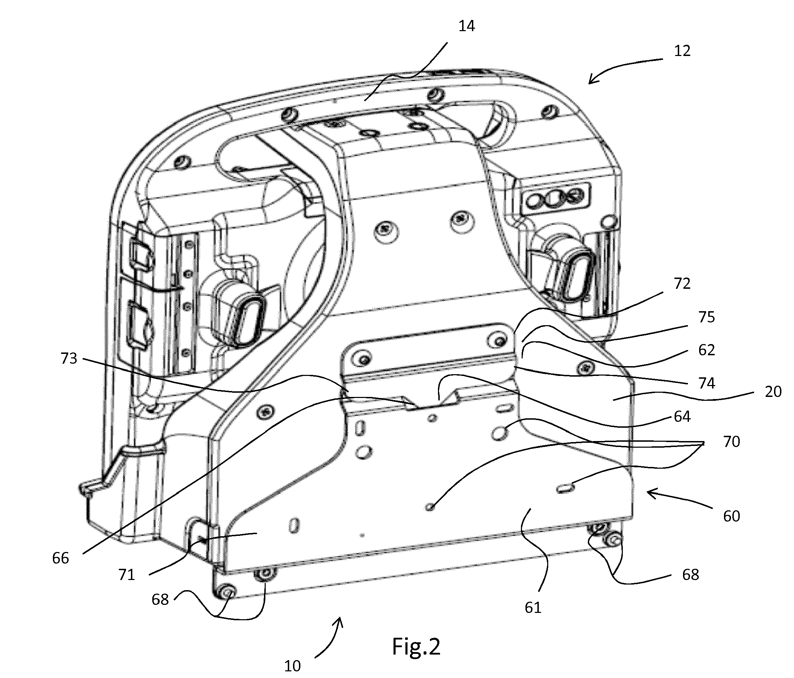

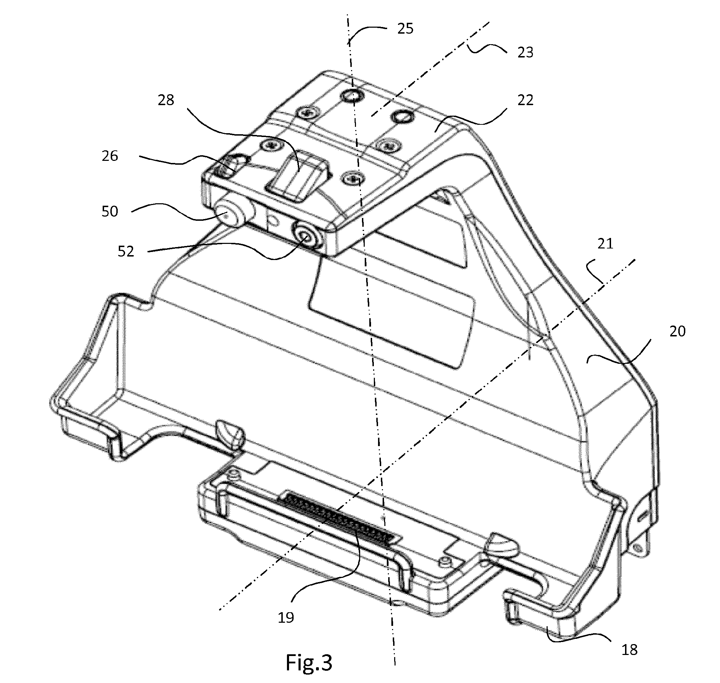

Referring to Figures 1 and 2, a docking station is indicated generally at 10 and a mobile computer is indicated generally at 12. The mobile computer 10 is of the type having a handle 14 and a touchscreen 16. For example, the mobile computer 10 may be a Panasonic Toughbook® H1 Health mobile clinical assistant, a Panasonic Toughbook® H1 Field handheld tablet PC, or a Panasonic Toughbook® H2 handheld tablet PC. The docking station 10 has a base support 18 which is cup shaped so as to receive and support the base of the mobile computer 12. As shown in Figure 3, the base support 18 includes an electrical connection 19 for charging the onboard battery of the mobile computer and for connection with other electrical components, which can be connected (not shown) beneath the base support 18. The connector is preferably mounted with a degree of resilience or give so that reliable connection can be made with the corresponding connector on the mobile computer. However, in alternative embodiments, there may be no electrical connection provided.

Referring to Figures 1, 2 and 3, a rear support 20 extends upwardly from the base support 18 along an axis 25 that is transverse to an axis 21 extending along the base support in a direction of the depth of the mobile computer. The rear support 20 is arranged to be positioned behind the mobile computer 12 when the mobile computer 12 is placed in the docking station 10, so as to support the rear of the mobile computer 12. Accordingly, the rear support 20 may curve towards the mobile computer to follow the profile of the rear of the mobile computer 12. The rear support 20 may also, as in this example, narrow as it extends from the base support 18, so as to permit access to access ports (not shown) of the mobile computer 12, for example USB or ethernet ports. The rear support 20 extends to a guide arm 22. The guide arm 22 having a longitudinal axis 23 arranged transverse to the axis 25, such that the base support 18, rear support 20 and the guide arm 22 form a c-shaped structure. The arrangement of the guide arm 22 is such that it is positionable underneath the handle 14 of the mobile computer 12. In this example, the guide arm is dimensioned to be a close fit in the handle 14 of the mobile computer 12. Advantageously, such dimensioning of the guide arm 22 limits the possible movement of the mobile computer 12 in the docking station 10.

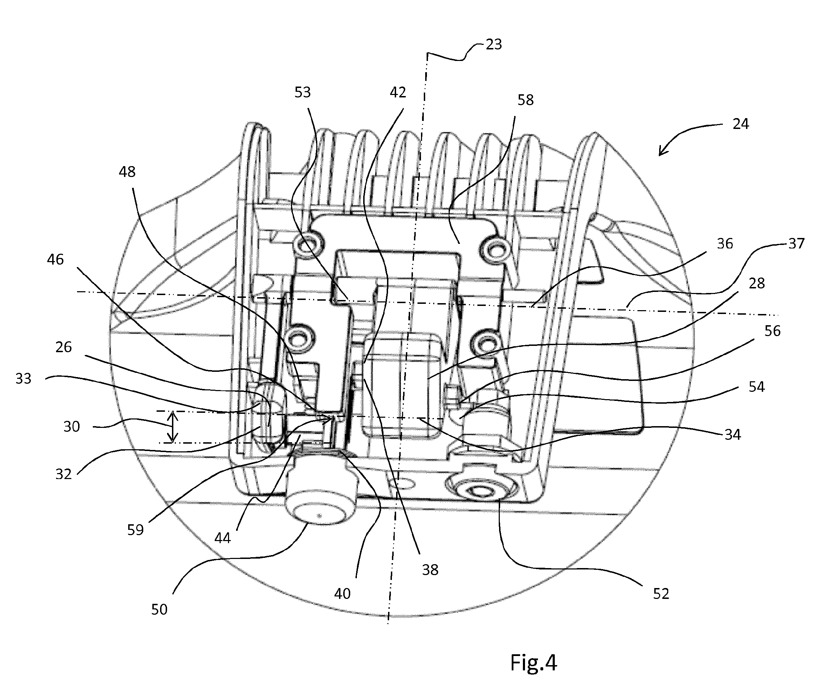

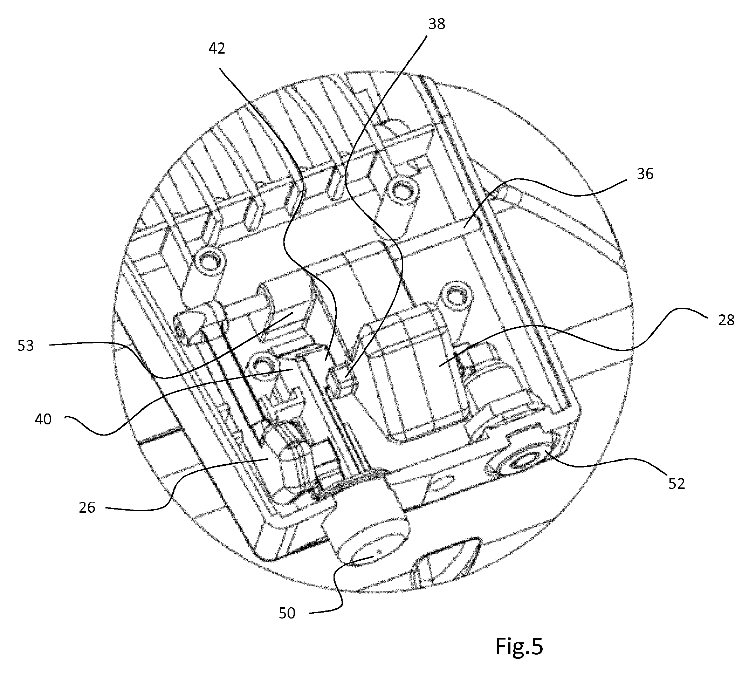

A latching mechanism, shown in more detail in Figures 4 and 5 (indicated generally at 24), is located on the guide arm 22. The latching mechanism 24 being arranged such that a protruding portion of an actuator 26 and a protruding portion of a latch 28 protrude from the guide arm 22 in the direction of the handle 14 of the mobile computer 12. That is, the actuator and latch protrude upwardly from the guide arm 22.

Although in this example the guide arm 22 is positioned under the handle 14 of the mobile computer 12 when the mobile computer is in the docking station 10, in alternative embodiments the guide arm 22 may be positioned on top of the mobile computer 12 and the protruding portions of the actuator 26 and latch 28 are arranged to protrude downwardly towards the base support 18. In this alternative embodiment, the mobile computer may be of the type not having a handle, for example a tablet computer.

In Figures 1 and 2, the latch 28 is in a latched position, such that the latch 28 prevents removal of the mobile computer 12 from the docking station 10.

Referring to Figures 4 and 5, the actuator 26 is positioned such that it is forward of the latch 28 but overlaps the latch by a distance 30 in the axial direction, i.e. in the direction of the longitudinal axis 23 of the guide arm 22. Each of the actuator 26 and latch 28 have an inclined surface 32 and 34, respectively.

The latching mechanism contains a support structure 58 that provides rigidity and robustness to the latching mechanism. In this example, the support structure 58 is n-shaped and arranged around the latch 28. Mounted in the support structure is an axle 36 arranged transverse to the longitudinal axis of the guide arm 22. The actuator 26 and the latch 28 are pivotally mounted to the axle 36 of the locking mechanism 24, so as to permit rotary movement of the actuator 26 and the latch 28 about an axis 37 defined by an axle 36 of the latching mechanism 24. The latch 28 has a first protrusion 38 which in the latched position, is blocked by a first projection 42 of a retainer 40.

The retainer 40 has a second projection 44 that engages with the actuator 26. The second projection 44 that engages with the actuator 26 has an inclined surface which engages an inclined rear surface of the actuator 26. In this example, the support structure 58 contains a channel 59 that guides the retainer 40 between the blocking position, where the first protrusion 38 is blocked by the first projection 42 of the retainer 40, and the unblocked position where the first projection 42 of the retainer 40 is positioned so as to permit movement of the first protrusion 38 and therefore permits movement of the latch 28.

A spring 46 is positioned between the second projection 44 of the retainer and a static component 48 of the latching mechanism 24, the spring biasing the latch 28 to the latched position shown in Figure 4, and the spring biasing the retainer 40 to a blocking position that prevents movement of the latch 28 to an unlatched position.

A latch release button 50 is connected to the retainer 40 and is aligned with a longitudinal axis of the guide arm 22. The connection of the latch release button to the retainer 40 is such that the spring 46 biases the latch release button 50 to a position where the retainer 40 is preventing movement of the latch 28. Mounted on the axle 36 of the latching mechanism 24 and connected to the latch 28 is an abutment surface 53. The abutment surface 53 is arranged to extend downwardly from the axle 36 such that when the retainer 40 moves longitudinally in a direction of the longitudinal axis 23 of the guide arm 22, the abutment surface 53 is contacted by the retainer 40 and causes the latch 28 to rotate towards an unlatched position. The latch release button 50 is configured such that it can move the retainer 40 such that the retainer 40 contacts the abutment surface 53 and moves the abutment surface 53 so as to unlatch the latch 28.

In this example, the latching mechanism 24 also has a lock 52. The lock 52 has a locking arm 54 which when rotated with a key engages a second protrusion 56 of the latch 28 so as to block movement of the latch 28 to an unlatched position. In the example shown in Figures 4 and 5, the lock 52 is positioned on the opposite side of the latch 28 to the latch release button 50, but in alternative examples, the lock 52 may be positioned on the same side as the latch release button 50 and/or may block movement of the retainer 40.

To place the mobile computer 12 into the docking station 10, the base of the mobile computer 12 is received in the base support 18 of the docking station and tilted forward. The mobile computer 12 is then tilted towards the latching mechanism 24 (i.e. tilted backwards). As the mobile computer 12 is tilted the mobile computer 12 contacts the inclined surface 32 of the actuator 26, and further tilting causes the actuator 26 to depress and rotate about an axis 37 defined by the axle 36 of the latching mechanism 24. The inclined surface 32 of the actuator means the actuator 26 is more easily rotated when contacted by the mobile computer 12, and the rotational movement of the actuator 26 further eases insertion of the mobile computer 12 in the docking station 10 because it permits the actuator 26 to generally follow the path of the tilting mobile computer 12.

As the actuator 26 rotates, the rear inclined surface of the actuator slides against the inclined surface of the second projection 44 of the retainer. The cooperation of these two inclined surfaces causes the retainer 40 to slide parallel to axis 23. The linear motion of the retainer 40 causes the first projection 42 of the retainer to move out of alignment with the first protrusion 38 of the latch 28, thus permitting movement of the latch 28.

With further tilting of the mobile computer 12, the handle 14 contacts the latch 28, whilst the actuator 26 is depressed, and the handle 14 progressively depresses the latch 28. As the latch 28 is depressed, the latch 28 rotates about the axis 37 defined by the axle 36 of the latching mechanism 24. The latch 28 is progressively depressed, and once the first protrusion 38 is in a position where it can no longer slide back, due to the contact of the latch 28 with the handle 14, the actuator 26 may cease to be depressed.

Further tilting of the mobile computer 12 causes the handle 14 to ride fully over the latch 28.

Once the handle 14 is fully over the latch 28, the latch 28 then springs back to protrude from the guide arm and prevents forward tilting of the handle 14. The retainer 40 then slides back to a rest position, such that the first projection 42 is blocking the motion of the first protrusion 38. This positioning of the retainer 40 prevents the latch 28 from being unintentionally depressed.

Advantageously, the latching mechanism, as described, permits the mobile computer 12 to be placed in the docking station 10 by a user using only a single hand.

For security purposes, the lock 52 can be locked. In this example, the forward positioning of the latch 28 and the axial overlap 30 of the actuator 26 and latch 28 enables the latch 28 to be contacted whilst the actuator 26 is depressed. However, in other examples there may be no overlap 30, for example if the width of the handle of the mobile computer is greater the handle 14 of the mobile computer 12 of the present example. Again, similarly as for the actuator 26, the inclined surface and rotary motion of the latch 28 eases insertion of the mobile computer in the docking station.

To remove the mobile computer 12 from the docking station 10, if the lock 52 is locked this is first unlocked. Then, the latch release button 50 is pressed. Pressing of the latch release button 50 causes the retainer 40 to move linearly in the same axial direction as the latch release button, which causes the first projection 42 of the retainer 40 to unblock the motion of the first protrusion 38 of the latch 28. Further, pressing of the latch release button causes an end of the retainer 40 to contact the abutment surface 53, causing the latch to pivot about the axis 37 defined by the axle 36, and move to the unlatched position.

The mobile computer 12 can then be tilted past the latch 28 and removed from the docking station 10. Contact of the handle 14 of the mobile computer 12 with an inclined surface 33 of the actuator 26 causes the actuator 26 to automatically depress. The provision of the latch release button 50 is advantageous because it permits the handle 14 of the mobile computer 12 to be grasped and the button depressed with one hand, allowing one handed removal.

Referring to Figure 2, the docking station 10 can be mounted to a surface, for example a wall, using mounting system 60. Mounting system 60 has a mounting bracket 61, which can be attached to a surface using a fastener, for example screws, through holes 70 (not all shown for clarity) positioned in the mounting bracket. In this example, different shaped holes 70 are in various positions on the mounting bracket 61 to permit the user to select an appropriate fastener and to select the appropriate holes to attach the mounting bracket to a particular surface.

Advantageously, the mounting bracket 61 can be attached to a surface independently of the docking station 10, providing a user with unrestricted access to the mounting bracket 61 enabling them to easily and accurately attach the mounting bracket 61 to a surface. The mounting bracket 61 has a depressed portion 71 in which the holes 70 for attaching the mounting bracket 61 to a surface are positioned, and a raised portion 73, which when the docking station 10 is attached is positioned flush against the docking station 10. Positioned between the depressed portion 71 and the raised portion 73 is a receiving slot 66.

The mounting system 60 also has a docking station bracket 62, which is attached to the docking station 10 using two screws 72, but alternative connection means can be used. The docking station bracket 62 has a depressed portion 74, which is arranged parallel to the rest of the docking station bracket 62, but raised away from the rear surface of the docking station 10. The depressed portion 74 is such that the raised portion 73 of the mounting bracket 61 can be slide underneath the depressed portion 74.

Extending from the depressed portion 74 of the docking station bracket 62 is a positioning portion 64, which in this example has two inclined sections so as to form a triangular shaped locating hook. In use, the positioning portion can be slide into the receiving slot 66 of the mounting bracket 61. In this example there is only one positioning portion 64 and one receiving slot 66, but in alternative examples there may be two or more positioning portions and two or more receiving slots. Once the positioning portion 64 is received into the receiving slot 66, the docking station bracket 62 and the mounting bracket 61 are connected. Advantageously, the triangular positioning portion 64 enables the docking station bracket 62 to be aligned with the mounting bracket 61. The connection between the mounting bracket 61 and the docking station bracket 62 can be secured using fasteners 68, which may be for example a (tamper resistant) screw and bolt. In this example four fasteners are shown, but more fasteners or fewer fasteners may be used.

It should be understood that references such as front, rear, top and bottom, etc are used for illustrative purposes and should not be regarded as limiting.

In further alternative examples, the mobile computer may be secured within a docking station using the mechanism described above in a variety of other ways. For example, the mobile computer may be slid rather than tilted into the docking station having guide channels for the mobile computer, and the actuator and the latch may be positioned on a base support of the docking station; the mobile computer could then be slid along the base support of the docking station to an end stop, and in the latched position, the latch would latch over a side edge of the mobile computer.

In a further alternative example, the base support may be replaced by a further latching mechanism, such that to place the mobile computer in the docking station, the mobile computer is inserted directly towards both latching mechanisms, and once in place the latch of each latching mechanism would be in the latched position and block removal of the mobile computer from the docking station. An optional adaptation to such examples is for the docking station to have side walls to further support the mobile computer.

In further alternative examples, the latch, the actuator, and/or the release button may have alternative inter-lock configurations. For example, the protrusion/projection arrangement may be replaced by a cam and follower or a slot and pin arrangement. In another example, there may be a rotational connection between the actuator and the latch or the connection between the actuator and latch could be modified to be a rack and pinion arrangement. In yet a further example, the latch and/or the actuator may be linear push buttons, such that they move linearly rather than rotationally when contacted by a handle of the mobile computer.

Although the docking station of the type described above is considered to be particularly useful in relation to ruggedised tablet format mobile computers that use desktop operating systems, the present applicant envisages that the latching mechanism may nevertheless be utilised in relation to those tablet mobile computers that utilise a mobile operating system such as Android or iOS.

## Claims

1. A docking station (10) for a mobile computer (12), the docking station (10) having a latching mechanism for latching a mobile computer (12) in the docking station (10), the mobile computer being placeable in the docking station (10) by inserting the mobile computer (12) towards the latching mechanism, the latching mechanism having:
a latch (28) moveable between an unlatched position and a latched position, such that in the unlatched position the mobile computer (12) can be placed in or removed from the docking station (10) and in the latched position removal of the mobile computer (12) from the docking station is prevented; **characterised by**
a retainer (40) moveable between a blocking position and an unblocked position, such that in the blocking position the retainer (40) prevents movement of the latch (28) to the unlatched position and in the unblocked position movement of the latch to the unlatched position is permitted; and
an actuator (26) for moving the retainer (40) between the blocking and unblocked position;
wherein the actuator (26) is positioned such that when the mobile computer (12) is inserted towards the latching mechanism the mobile computer (12) contacts and actuates the actuator (26) to move the retainer (40) to the unblocked position and whilst the retainer (40) is in the unblocked position the mobile computer (12) contacts the latch (28) and at least partially moves the latch (28) to the unlatched position.

2. The docking station according to claim 1, wherein the actuator (26) is positioned forward of the latch (28) such that the mobile computer (12) first contacts the actuator (26) and subsequently contacts the latch (28).

3. The docking station according to any one of the previous claims, wherein a surface of the actuator (26) that contacts the mobile computer (12), when the mobile computer (12) is being placed in the docking station, is inclined.

4. The docking station according to any one of the previous claims, wherein the latch (28) is resiliently biased.

5. The docking station according to any one of the previous claims, wherein the actuator (26) is pivotable about an axis of the latching mechanism, such that rotary movement of the actuator (26) moves the retainer (40) to the unblocked position.

6. The docking station according to any one of the previous claims, wherein the latch (28) is pivotable about an axis of the latching mechanism, such that rotary movement of the latch (28) moves the latch (28) between the latched and unlatched position.

7. The docking station according to claims 5 and 6, wherein the latch (28) and the actuator (26) are pivotable about a common axis.

8. The docking station according to any one of the previous claims, further comprising a latch release button (50) for moving the retainer (40) to the unblocked position so as to permit movement of the latch (28) to the unlatched position.

9. The docking station according to any one of the previous claims further comprising a guide arm (22), and the latch (28) and actuator (26) being positioned so as to protrude from the guide arm (22).

10. The docking station according to claim 9, wherein the guide arm (22) is configured such that in the latched position, the guide arm (22) is positioned underneath a handle (14) of the mobile computer (12) and the latch (28) and the actuator (26) protrude from the guide arm (22) in the direction of the handle (14) of the mobile computer (12).

11. The docking station according to any one of claims 9 or 10, the docking station further comprising:
a base support (18) for receiving the base of the mobile computer (12); and
a rear support (20) for supporting the rear of the mobile computer (12);
wherein the guide arm (22) is positioned to oppose the base support (18) and the guide arm (22) supports the upper end of the mobile computer (12), and
wherein the base is cupped such that to place the mobile computer (12) in the docking station (10), the base of the mobile computer is received in the base and the mobile computer is tilted towards the actuator (26) and the latch (28).

12. The docking station according to any one of the previous claims, further comprising electrical connection (19) to the mobile computer (12).

## Patentansprüche

1. Andockstation (10) für einen mobilen Computer (12), wobei die Andockstation (10) einen Einklinkmechanismus zum Einklinken eines mobilen Computers (12) in die Andockstation (10) besitzt, wobei der mobile Computer in der Andockstation (10) durch Einsetzen des mobilen Computers (12) in den Einklinkmechanismus platziert werden kann, wobei der Einklinkmechanismus umfasst:
eine Klinke (28), die zwischen einer ausgeklinkten Position und einer eingeklinkten Position beweglich ist, derart, dass der mobile Computer (12) in der ausgeklinkten Position in der Andockstation (10) platziert oder hieraus entnommen werden kann und in der eingeklinkten Position ein Entnehmen des mobilen Computers (12) aus der Andockstation verhindert wird; **gekennzeichnet durch**
eine Halterung (40), die zwischen einer Blockierposition und einer freigegebenen Position beweglich ist, derart, dass die Halterung (40) in der Blockierposition eine Bewegung der Klinke (28) in die ausgeklinkte Position verhindert und in der freigegebenen Position eine Bewegung der Klinke in die ausgeklinkte Position erlaubt; und
einen Aktor (26) zum Bewegen der Halterung (40) zwischen der Blockierposition und der freigegebenen Position;
wobei der Aktor (26) in der Weise positioniert ist, dass der mobile Computer (12) dann, wenn er in den Einklinkmechanismus eingesetzt ist, mit dem Aktor (26) in Kontakt gelangt und diesen betätigt, um die Halterung (40) in die freigegebene Position zu bewegen, während der mobile Computer (12) dann, wenn die Halterung (40) in der freigegebenen Position ist, mit der Klinke (28) in Kontakt gelangt und die Klinke (28) wenigstens teilweise in die ausgeklinkte Position bewegt.

2. Andockstation nach Anspruch 1, wobei der Aktor (26) vor der Klinke (28) positioniert ist, derart, dass der mobile Computer (12) zuerst mit dem Aktor (26) in Kontakt gelangt und anschließend mit der Klinke (28) in Kontakt gelangt.

3. Andockstation nach einem der vorhergehenden Ansprüche, wobei eine Oberfläche des Aktors (26), die mit dem mobilen Computer (12) in Kontakt gelangt, wenn der mobile Computer (12) in der Andockstation angeordnet wird, geneigt ist.

4. Andockstation nach einem der vorhergehenden Ansprüche, wobei die Klinke (28) elastisch vorbelastet ist.

5. Andockstation nach einem der vorhergehenden Ansprüche, wobei der Aktor (26) um eine Achse des Einklinkmechanismus schwenkbar ist, derart, dass eine Drehbewegung des Aktors (26) die Halterung (40) in die freigegebene Position bewegt.

6. Andockstation nach einem der vorhergehenden Ansprüche, wobei die Klinke (28) um eine Achse des Einklinkmechanismus schwenkbar ist, derart, dass eine Drehbewegung der Klinke (28) die Klinke (28) zwischen der eingeklinkten und der ausgeklinkten Position bewegt.

7. Andockstation nach den Ansprüchen 5 und 6, wobei die Klinke (28) und der Aktor (26) um eine gemeinsame Achse schwenkbar sind.

8. Andockstation nach einem der vorhergehenden Ansprüche, die ferner einen Klinkenlöseknopf (50) umfasst, um die Halterung (40) in die freigegebene Position zu bewegen, um eine Bewegung der Klinke (28) in die ausgeklinkte Position zu erlauben.

9. Andockstation nach einem der vorhergehenden Ansprüche, die ferner einen Führungsarm (22) umfasst, wobei die Klinke (28) und der Aktor (26) so positioniert sind, dass sie von dem Führungsarm (22) vorstehen.

10. Andockstation nach Anspruch 9, wobei der Führungsarm (22) so konfiguriert ist, dass in der eingeklinkten Position der Führungsarm (22) unter einem Griff (14) des mobilen Computers (12) positioniert ist und die Klinke (28) und der Aktor (26) von dem Führungsarm (22) in Richtung des Griffs (14) des mobilen Computers (12) vorstehen.

11. Andockstation nach einem der Ansprüche 9 oder 10, wobei die Andockstation ferner Folgendes umfasst:
einen Basisträger (18), um die Basis des mobilen Computers (12) aufzunehmen; und
einen hinteren Träger (20), um die Rückseite des mobilen Computers (12) zu tragen;
wobei der Führungsarm (22) so positioniert ist, dass er sich gegenüber dem Basisträger (18) befindet, und der Führungsarm (22) das obere Ende des mobilen Computers (12) trägt, und
wobei die Basis becherförmig ist, derart, dass die Basis des mobilen Computers, um den mobilen Computer (12) in der Andockstation (10) anzuordnen, in der Basis aufgenommen wird und der mobile Computer zu dem Aktor (26) und der Klinke (28) geneigt wird.

12. Andockstation nach einem der vorhergehenden Ansprüche, die ferner eine elektrische Verbindung (19) zu dem mobilen Computer (12) umfasst.

## Revendications

1. Station d'accueil (10) pour un ordinateur mobile (12), la station d'accueil (10) présentant un mécanisme de verrouillage destiné à verrouiller un ordinateur mobile (12) dans la station d'accueil (10), l'ordinateur mobile pouvant être placé dans la station d'accueil (10) en insérant l'ordinateur mobile (12) vers le mécanisme de verrouillage, le mécanisme de verrouillage présentant :
- un module de verrouillage (28), mobile entre une position déverrouillée et une position verrouillée, de sorte que, dans la position déverrouillée, l'ordinateur mobile (12) peut être placé dans, ou retiré de, la station d'accueil (10), et dans la position verrouillée, le retrait de l'ordinateur mobile (12) de la station d'accueil est empêché ; **caractérisé par**
- un module de retenue (40), mobile entre une position de blocage et une position non bloquée, de sorte que, dans la position de blocage, le module de retenue (40) empêche tout mouvement du module de verrouillage (28) vers la position déverrouillée, et dans la position non bloquée, tout mouvement du module de verrouillage vers la position déverrouillée est autorisé ; et
- un module d'actionnement (26) destiné à déplacer le module de retenue (40) entre la position de blocage et la position non bloquée ;
- dans lequel le module d'actionnement (26) est positionné de sorte que, lorsque l'ordinateur mobile (12) est inséré vers le mécanisme de verrouillage, l'ordinateur mobile (12) contacte et actionne le module d'actionnement (26) afin de déplacer le module de retenue (40) vers la position non bloquée, et tandis que le module de retenue (40) est dans la position non bloquée, l'ordinateur mobile (12) contacte le module de verrouillage (28) et déplace au moins partiellement le module de verrouillage (28) vers la position déverrouillée.

2. Station d'accueil selon la revendication 1, dans laquelle le module d'actionnement (26) est positionné en avant du module de verrouillage (28) de sorte que l'ordinateur mobile (12) contacte tout d'abord le module d'actionnement (26) et qu'il contacte subséquemment le module de verrouillage (28).

3. Station d'accueil selon l'une quelconque des revendications précédentes, dans laquelle une surface du module d'actionnement (26) qui contacte l'ordinateur mobile (12), lorsque l'ordinateur mobile (12) est placé dans la station d'accueil, est inclinée.

4. Station d'accueil selon l'une quelconque des revendications précédentes, dans laquelle le module de verrouillage (28) est polarisé de manière résiliente.

5. Station d'accueil selon l'une quelconque des revendications précédentes, dans laquelle le module d'actionnement (26) peut pivoter autour d'un axe du mécanisme de verrouillage, de sorte que le mouvement de rotation du module d'actionnement (26) déplace le module de retenue (40) vers la position non bloquée.

6. Station d'accueil selon l'une quelconque des revendications précédentes, dans laquelle le module de verrouillage (28) peut pivoter autour d'un axe du mécanisme de verrouillage, de sorte que le mouvement de rotation du module de verrouillage (28) déplace le module de verrouillage (28) entre la position verrouillée et la position déverrouillée.

7. Station d'accueil selon les revendications 5 et 6, dans laquelle le module de verrouillage (28) et le module d'actionnement (26) peuvent pivoter autour d'un axe commun.

8. Station d'accueil selon l'une quelconque des revendications précédentes, comprenant en outre un bouton de libération de verrouillage (50) destiné à déplacer le module de retenue (40) vers la position non bloquée de manière à permettre un déplacement du module de verrouillage (28) vers la position déverrouillée.

9. Station d'accueil selon l'une quelconque des revendications précédentes, comprenant en outre un bras de guidage (22), et dans laquelle le module de verrouillage (28) et le module d'actionnement (26) sont positionnés de manière à faire saillie à partir du bras de guidage (22).

10. Station d'accueil selon la revendication 9, dans laquelle le bras de guidage (22) est configuré de sorte que, dans la position verrouillée, le bras de guidage (22) est positionné sous une poignée (14) de l'ordinateur mobile (12), et le module de verrouillage (28) et le module d'actionnement (26) font saillie à partir du bras de guidage (22) dans la direction de la poignée (14) de l'ordinateur mobile (12).

11. Station d'accueil selon l'une quelconque des revendications 9 ou 10, dans laquelle la station d'accueil comporte en outre :
- un support de base (18) destiné à recevoir la base de l'ordinateur mobile (12) ; et
- un support arrière (20) destiné à prendre en charge l'arrière de l'ordinateur mobile (12) ;
- dans laquelle le bras de guidage (22) est positionné de manière à s'opposer au support de base (18), et le bras de guidage (22) prend en charge l'extrémité supérieure de l'ordinateur mobile (12) ; et
- dans laquelle la base est incurvée de sorte que, pour placer l'ordinateur mobile (12) dans la station d'accueil (10), la base de l'ordinateur mobile est reçue dans la base, et l'ordinateur mobile est incliné vers le module d'actionnement (26) et le module de verrouillage (28).

12. Station d'accueil selon l'une quelconque des revendications précédentes, comprenant en outre une connexion électrique (19) à l'ordinateur mobile (12).
